# EUROPÄISCHE PATENTSCHRIFT

(11) **EP 2 532 932 B1**
(45) Veröffentlichungstag und Bekanntmachung des Hinweises auf die Patenterteilung: **03.05.2017**
(21) Anmeldenummer: 12170189.0
(22) Anmeldetag: 31.05.2012
(51) Int. Cl.: F16J 15/46, F16J 15/48

(54) **Radialwellendichtung**
Radial roller seal
Joint d'arbre radial

(30) Priorität: 06.06.2011 DE 102011077015
(43) Veröffentlichungstag der Anmeldung: 12.12.2012
(73) Patentinhaber: ElringKlinger AG, 72581 Dettingen (DE)
(72) Erfinder: Koch, Uwe, 72124 Pliezhausen (DE); Schuster, Martin, 71397 Leutenbach (DE); Schuhmacher, Walter, 74321 Bietigheim-Bissingen (DE)
(74) Vertreter: Hoeger, Stellrecht & Partner Patentanwälte mbB

(56) Entgegenhaltungen:
- EP-A2- 0 841 508
- DE-A1- 2 229 862
- DE-A1- 4 243 828
- DE-A1-102009 014 214
- US-A- 3 637 222

## Beschreibung

Die vorliegende Erfindung betrifft eine Radialwellendichtung zur Abdichtung zwischen einer Hochdruckseite und einer Niederdruckseite in einem Ringraum zwischen einer Welle und einem die Welle aufnehmenden statischen Bauteil, wobei die Radialwellendichtung rotationssymmetrisch ausgebildet und koaxial mit der Welle angeordnet ist. (siehe US-A-3637222; DE-A-4242828) Bei einer Vielzahl von technischen Anwendungen müssen rotierende Wellen im Bereich ihres Durchtritts durch ein statisches Bauteil abgedichtet werden, um einen unerwünschten Übertritt eines fluiden Mediums von der einen auf die andere Seite des statischen Bauteils zu verhindern. Die zu diesem Zweck eingesetzten Radialwellendichtungen müssen insbesondere dann besonders hohe Anforderungen erfüllen, wenn auf beiden Seiten unterschiedliche Druckverhältnisse herrschen, d.h. wenn eine Abdichtung zwischen einer Hochdruckseite und einer Niederdruckseite erfolgen muss. Dies betrifft die Verwendung von Radialwellendichtungen z.B. in Turbinen, Motoren oder Getrieben, wobei das druckbeaufschlagte Medium sowohl flüssig als auch gasförmig sein kann.

Die einfachste Bauform einer Radialwellendichtung umfasst einen Dichtring mit einer an der Welle anliegenden Dichtlippe, welche in Richtung der Hochdruckseite vorgewölbt ist. Die Pressung dieser Dichtlippe an die Welle erfolgt unter anderem durch eine direkte Druckbeaufschlagung mit dem anstehenden Medium, d.h. die Anpresskraft steigt mit der Druckdifferenz zwischen den beiden Seiten. Bei sehr hohen Drücken und insbesondere bei einer gleichzeitig hohen Drehzahl der Welle kann die entstehende Reibungswärme zu erhöhtem Verschleiß und somit zum Ausfall der Dichtung führen, und zwar sowohl durch eine thermische Überbeanspruchung des Materials des Dichtringes als auch des druckbeaufschlagten Mediums (z.B. Verkohlung von Öl).

Um das Problem einer zu starken Pressung der Dichtung bei hohen Drücken zu vermeiden, werden gemäß dem Stand der Technik so genannte druckentlastete Radialwellendichtringe eingesetzt. Diese weisen eine Dichtlippe mit einer relativ kleinen Dichtfläche auf, wobei die Dichtlippe so gestaltet ist, dass die resultierende radiale Pressung der Dichtlippe an die Welle weitgehend unabhängig von den Druckverhältnissen ist. Um dennoch eine ausreichende Pressung zu gewährleisten, ist dabei eine Vorspannung der Dichtlippe durch ein federndes Element, in der Regel durch einen O-Ring aus einem Elastomermaterial, erforderlich, wobei dies wiederum den Nachteil hat, dass diese konstante Vorspannung auch bei niedrigen Drehzahlen bzw. beim Stillstand der Welle hoch ist, was zu einem ruckartigen Anfahren der Welle aufgrund einer hohen Haftreibung führt . Ebenfalls problematisch ist die Reibung der Dichtlippe, die bei entsprechenden Betriebsbedingungen zu einer hohen thermischen Belastung und dadurch zu einem starken Verschleiß der Dichtung führt.

Aufgrund der genannten Nachteile sind bekannte Radialwellendichtungen für eine Anwendung bei hohen Drücken und hohen Drehzahlen, wie z.B. bei Abgasturboladern für Verbrennungsmotoren, nicht ausreichend verschleißfest bzw. weisen eine zu hohe Reibung auf.

Der Erfindung liegt daher die Aufgabe zugrunde, eine verbesserte Radialwellendichtung mit einer geringen Reibung und einer hohen Verschleißfestigkeit vorzuschlagen.

Diese Aufgabe wird bei der Radialwellendichtung der eingangs genannten Art erfindungsgemäß dadurch gelöst, dass die Radialwellendichtung umfasst:
(i) einen ersten Dichtring aus einem nicht-elastischen Kunststoffmaterial, der im Bereich seines Innenumfangs in Richtung der Niederdruckseite vorgewölbt ist und eine an der Welle anliegende erste Dichtlippe bildet,
(ii) einen Distanzring, der in Bezug auf den ersten Dichtring in Richtung der Niederdruckseite axial versetzt angeordnet ist, mit einer der Hochdruckseite zugewandten ersten Stirnfläche und einer der Niederdruckseite zugewandten zweiten Stirnfläche, und
(iii) ein elastisches Formteil, das im Bereich seines Außenumfangs an der zweiten Stirnfläche des Distanzrings anliegt und im Bereich seines Innenumfangs in Richtung der Hochdruckseite vorgewölbt ist und an der ersten Dichtlippe anliegt,
wobei zwischen dem Distanzring, dem elastischen Formteil und gegebenenfalls der ersten Dichtlippe ein Hohlraum ausgebildet ist, der mit dem auf der Hochdruckseite herrschenden Druck oder mit einem Steuerdruck beaufschlagbar ist, derart, dass in Folge der Druckbeaufschlagung die erste Dichtlippe über das elastische Formteil an die Welle anpressbar ist.

Bei der erfindungsgemäßen Radialwellendichtung erfolgt eine Druckbeaufschlagung der ersten Dichtlippe mit dem auf der Hochdruckseite herrschenden Druck oder mit einem entsprechenden Steuerdruck, um den direkt zwischen der Welle und der ersten Dichtlippe anstehenden Druck auszugleichen, sodass eine im Wesentlichen gleichbleibende Pressung der ersten Dichtlippe an die Welle, weitgehend unabhängig von der jeweiligen Druckdifferenz zwischen den beiden Seiten, ermöglicht wird. Besonders vorteilhaft ist hierbei, dass der in dem Hohlraum herrschende Ausgleichsdruck über das elastische Formteil zumindest teilweise indirekt auf die erste Dichtlippe übertragen wird und somit gleichmäßig über einen relativ großen Bereich der Dichtlippe verteilt werden kann. Hierbei kommt es nicht zu einer Reibung zwischen dem elastischen Formteil und der ersten Dichtlippe, sodass eine zusätzliche Wärmeentwicklung in diesem Bereich vermieden wird.

Das elastische Formteil kann ringförmig ausgestaltet sein, mit einem den Außenumfang definierenden äußeren Randbereich und einem den Innenumfang definierenden inneren Randbereich. Der mit dem Druck beaufschlagbare Hohlraum wird in diesem Fall durch das Anliegen des inneren Randbereichs des elastischen Formteils an der ersten Dichtlippe in Richtung der Welle abgedichtet.

Besonders bevorzugt ist es jedoch, wenn das elastische Formteil einen ersten Randbereich aufweist, der an der ersten Stirnfläche des Distanzrings anliegt, einen zweiten Randbereich, der an der zweiten Stirnfläche des Distanzrings anliegt, und einen die beiden Randbereiche verbindenden mittleren Bereich, der an der ersten Dichtlippe anliegt, wobei der Hohlraum zwischen dem Distanzring und dem mittleren Bereich des elastischen Formteils ausgebildet ist. Das elastische Formteil weist in diesem Fall einen in etwa U-förmigen Querschnitt auf, wobei der gekrümmte mittlere Bereich der Welle zugewandt ist und den Innenumfang des elastischen Formteils definiert. Diese Ausführungsform hat den wesentlichen Vorteil, dass der Hohlraum in Richtung der ersten Dichtlippe bzw. der Welle durch das elastische Formteil hermetisch abgedichtet ist und ein Austreten des zur Druckbeaufschlagung eingesetzten Mediums (typischerweise das Medium der Hochdruckseite) verhindert wird.

Über die Größe der Fläche des mittleren Bereichs des elastischen Formteils kann die auf die erste Dichtlippe übertragene Anpresskraft, die bei einem bestimmten Druck innerhalb des Hohlraums resultiert, so angepasst werden, dass die insgesamt resultierende Pressung der ersten Dichtlippe in einem vorgegebenen, für den jeweiligen Einsatzzweck der Radialwellendichtung optimalen Bereich liegt.

Die Medien auf der Hochdruckseite und auf der Niederdruckseite können bei der erfindungsgemäßen Radialwellendichtung gleich oder verschieden sein. Wenn die Radialwellendichtung z.B. zur Abdichtung der Welle auf der Verdichterseite eines Abgasturboladers eingesetzt wird, ist das Medium auf der Hochdruckseite die verdichtete Ladeluft und das Medium auf der Niederdruckseite ist Öl.

Bevorzugt ist der erste Randbereich des elastischen Formteils zwischen dem ersten Dichtring und der ersten Stirnfläche des Distanzrings kraftschlüssig gehalten. Zusätzlich kann das elastische Formteil auch mit dem ersten Dichtring und/oder mit der ersten Stirnfläche des Distanzrings verklebt sein.

Bei einer weiteren bevorzugten Ausführungsform der Erfindung umfasst die Radialwellendichtung ferner einen zweiten Dichtring aus einem nicht-elastischem Kunststoffmaterial, der in Bezug auf den Distanzring in Richtung der Niederdruckseite axial versetzt angeordnet ist, wobei der zweite Dichtring im Bereich seines Innenumfangs in Richtung der Hochdruckseite vorgewölbt ist und eine an der ersten Dichtlippe des ersten Dichtrings anliegende zweite Dichtlippe bildet. Die beiden durch den Distanzring getrennten Dichtringe sind also im Bereich ihres Innenumfangs in Richtung des jeweils anderen Dichtrings vorgewölbt, sodass sich die beiden Dichtlippen überlappen und nur die erste Dichtlippe an der Welle anliegt. Die erste und die zweite Dichtlippe können sich, je nach Dimensionierung der Radialwellendichtung, z.B. entlang eines sich in Axialrichtung erstreckenden Bereichs von mindestens 1 mm überlappen. Durch das Vorsehen von zwei sich überlappenden Dichtlippen wird das elastische Formteil, dessen mittlerer Bereich in diesem Fall sowohl an der ersten als auch an der zweiten Dichtlippe anliegt, besser von der an der Welle entstehenden Reibungswärme abgeschirmt als wenn nur eine Dichtlippe vorgesehen ist.

Der zweite Randbereich des elastischen Formteils ist vorzugsweise zwischen dem zweiten Dichtring und der zweiten Stirnfläche des Distanzrings kraftschlüssig gehalten. Wie im Fall des ersten Randbereichs kann auch hier zusätzlich eine Verklebung vorgesehen sein.

Die äußeren Bereiche der beiden Dichtringe, d.h. die der Welle abgewandten Bereiche, sind günstigerweise zueinander parallel in senkrecht zu der Welle verlaufenden Ebenen angeordnet. Sie können jedoch auch auf der Mantelfläche von Kegelstümpfen liegen, wobei die Dichtringe entlang ihres Außenumfangs den größten Abstand voneinander aufweisen und sich dieser Abstand radial nach innen hin verringert. Dasselbe gilt jeweils für den ersten und den zweiten Randbereich des elastischen Formteils und für die erste und die zweite Stirnfläche des Distanzrings.

Die Bestandteile der erfindungsgemäßen Radialwellendichtung können unmittelbar an dem statischen Bauteil, welches die Welle aufnimmt, angeordnet sein und von einer oder mehreren Komponenten dieses Bauteils gehalten werden.

Deutlich bevorzugt ist es jedoch, wenn die Radialwellendichtung ferner ein Gehäuse umfasst, welches den ersten Dichtring, den Distanzring, das elastische Formteil und gegebenenfalls den zweiten Dichtring miteinander verspannt. Durch ein derartiges Gehäuse bildet die Radialwellendichtung eine kompakte Einheit, welche einfacher und zuverlässiger verbaut werden kann.

Das Gehäuse ist bevorzugt radial nach außen und axial sowohl zur Hochdruckals auch zu Niederdruckseite hin geschlossen. Der einzige offene Bereich des Gehäuses ist somit der Innenumfang der Radialwellendichtung, wobei dieser Innenumfang durch die an der Welle anliegende erste Dichtlippe definiert wird. Die der Hochdruckseite zugewandte axiale Seite des Gehäuses ist entlang ihres Innenumfangs bevorzugt in Richtung der Niederdruckseite abgeknickt oder vorgewölbt und bildet somit eine Abstützung für die erste Dichtlippe des ersten Dichtrings. Dies gilt entsprechend für die der Niederdruckseite zugewandte axiale Seite des Gehäuses, die eine Abstützung für die zweite Dichtlippe eines gegebenenfalls vorgesehenen zweiten Dichtrings bilden kann.

Das Gehäuse kann ein oder mehrteilig ausgebildet sein, wobei der Zusammenbau der erfindungsgemäßen Radialwellendichtung durch ein mehrteiliges Gehäuse vereinfacht wird. Günstigerweise ist das Gehäuse zweiteilig ausgebildet, wobei ein erstes Gehäuseteil die radiale Außenseite und eine axiale Seite des Gehäuses bildet und ein zweites Gehäuseteil die andere axiale Seite bildet. Die beiden Gehäuseteile können z.B. über eine Bördelung miteinander verbunden werden, oder über andere bekannte Verbindungstechniken wie eine Verschweißung, Verschraubung oder Verklebung.

Das Gehäuse kann insbesondere aus einem metallischen Material oder aus einem Kunststoffmaterial gebildet sein, wobei Metall bevorzugt ist. Auch der Distanzring der erfindungsgemäßen Radialwellendichtung besteht günstigerweise aus Metall, wobei auch hier alternativ ein Kunststoffmaterial eingesetzt werden kann.

Der Hohlraum, der zwischen dem Distanzring und dem mittleren Bereich des elastischen Formteils ausgebildet ist, kann gemäß der Erfindung mit dem auf der Hochdruckseite herrschenden Druck oder mit einem Steuerdruck beaufschlagt werden. Durch die Verwendung eines Steuerdrucks kann die Pressung der ersten Dichtlippe an die Welle besonders präzise und unabhängig von dem auf der Hochdruckseite herrschenden Druck eingestellt werden. Andererseits ist diese Ausführungsform der Erfindung mit einem relativ hohen Aufwand verbunden.

Die Beaufschlagung des Hohlraums mit dem auf der Hochdruckseite herrschenden Druck ist wesentlich einfacher zu realisieren und ermöglicht über die Wahl der Flächenverhältnisse, wie oben beschrieben, ebenfalls eine weitgehend gleich bleibende Pressung der ersten Dichtlippe bei einem sich verändernden Druck auf der Hochdruckseite. Zur Druckbeaufschlagung des Hohlraums ist günstigerweise eine Fluidverbindung zwischen der Hochdruckseite und dem Hohlraum vorgesehen.

Diese Fluidverbindung umfasst vorzugsweise mindestens eine Bohrung durch den ersten Randbereich des elastischen Formteils, durch den ersten Dichtring und durch das Gehäuse der Radialwellendichtung. Es können mehrere Bohrungen vorgesehen sein, die über den Umfang der Radialwellendichtung verteilt sind, prinzipiell ist eine Bohrung jedoch ausreichend, da sich der Hohlraum durchgehend entlang des gesamten Umfangs der Radialwellendichtung erstreckt (im Wesentlichen in Form eines außen abgeflachten Torus).

Bei einer bevorzugten Ausführungsform mündet die mindestens eine Bohrung in einer Ringnut des Distanzrings, welche zu dem Hohlraum hin offen ist. Da sich die Ringnut entlang des gesamten Umfangs des Distanzrings erstreckt, kann die Bohrung nach dem Zusammenbau der Radialwellendichtung an einer beliebigen Stelle entlang des Umfangs vorgesehen werden.

Das nicht elastische Kunststoffmaterial, aus dem der erste Dichtring und gegebenenfalls der zweite Dichtring gebildet sind, umfasst bevorzugt ein Fluorpolymer, insbesondere ein homopolymeres PTFE oder ein TFE-Copolymer. Diese Fluorpolymere zeichnen sich durch einen geringen Reibungskoeffizienten und eine hohe Temperaturbeständigkeit aus. Besonders bevorzugt sind hierbei Compounds von Fluorpolymeren mit verschleißmindernden Füllstoffen wie z.B. Molybdänsulfid oder Graphit. Der oder die Dichtringe können durch ein materialabtragendes Verfahren (z.B. Drehen) in der gewünschten Form hergestellt werden, alternativ kann diese Form (also insbesondere die Vorwölbung der Dichtlippe) auch durch eine anschließende Umformung (Prägen) erzielt werden. Bei letzterem Verfahren ergibt sich eine vorteilhafte Initialspannung der Dichtlippe durch den so genannten Memory-Effekt.

Der oder die Dichtringe können durch das Gehäuse mit dem elastischen Formteil und dem Distanzring verspannt sein, d.h. lediglich kraftschlüssig gehalten werden oder zusätzlich verklebt oder anvulkanisiert sein. Bei Verwendung eines schmelzverarbeitbaren TFE-Copolymers (wie z.B. PFA oder Moldflon^{®}) können die Dichtringe auch an das Gehäuse angespritzt werden.

Der oder die Dichtringe weisen vorzugsweise eine Dicke im Bereich von ca. 0,2 mm bis ca. 1,5 mm auf.

Das elastische Formteil der erfindungsgemäßen Radialwellendichtung ist vorzugsweise aus einem Elastomer gebildet, insbesondere durch Umformen eines Flächenmaterials, durch Spritzgießen oder durch Sintern eines Granulats.

Ein bevorzugtes Elastomer ist insbesondere Fluorkautschuk, der eine relativ hohe Temperaturbeständigkeit aufweist. Es können aber auch andere Elastomere wie z.B. Styrol-Butadien-Kautschuk, Silikonkautschuk oder (für Spritzguss) thermoplastische Elastomere (z.B. Polyurethan) eingesetzt werden. Die thermische und mechanische Stabilität des elastischen Formteils können z.B. auch durch eine Faserverstärkung des Elastomers erhöht werden.

Das elastische Formteil weist bevorzugt eine Dicke von ca. 50 µm bis ca. 200 µm auf, wobei hiermit die Dicke des Formteils senkrecht zu dessen flächiger Erstreckung gemeint ist. Durch die Dicke des elastischen Formteils, aber auch durch die Auswahl des Elastomers kann die Übertragung des in dem Hohlraum herrschenden Drucks über das elastische Formteil auf die erste Dichtlippe des ersten Dichtrings in einem relativ weiten Bereich angepasst werden.

Die erfindungsgemäße Radialwellendichtung kann in verschiedenen Bereichen, die bereits eingangs genannt wurden, eingesetzt werden, also z.B. in Turbinen, Motoren oder Getrieben. Ein besonderer Aspekt der Erfindung betrifft die Verwendung der Radialwellendichtung in einem Abgasturbolader für einen Verbrennungsmotor, insbesondere auf dessen Verdichterseite.

Diese und weitere Vorteile der Erfindung werden unter Bezugnahme auf die Figuren anhand der nachfolgend beschriebenen Ausführungsbeispiele näher erläutert. Es zeigen im Einzelnen:
- Figur 1:: Schematische Querschnittsdarstellung eines ersten Ausführungsbeispiels einer erfindungsgemäßen Radialwellendichtung;
- Figur 2:: schematische Querschnittsdarstellung eines zweiten Ausführungsbeispiels einer erfindungsgemäßen Radialwellendichtung; und
- Figur 3:: schematische Querschnittsdarstellung eines dritten Ausführungsbeispiels einer erfindungsgemäßen Radialwellendichtung.

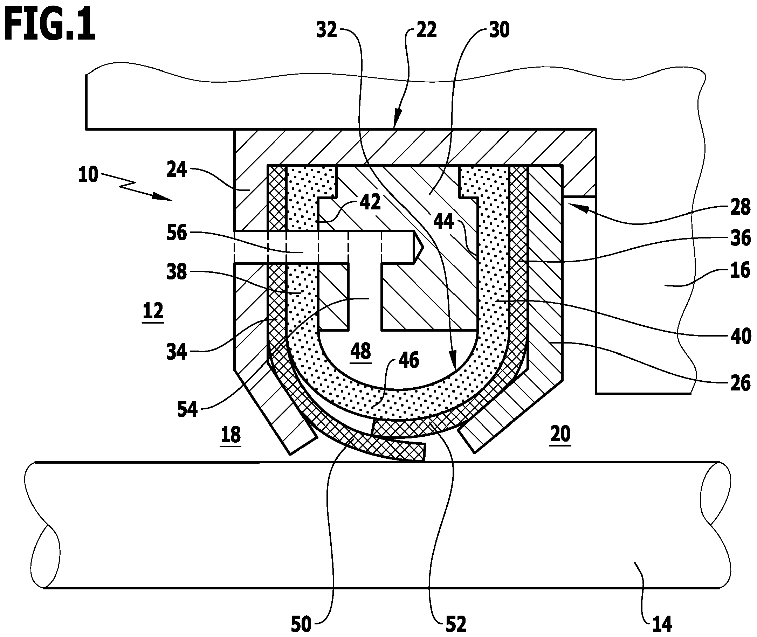

Die Figur 1 zeigt schematisch einen Radialquerschnitt durch ein erstes Ausführungsbeispiel einer erfindungsgemäßen Radialwellendichtung 10. Die Radialwellendichtung 10 ist in einem Ringraum 12 zwischen einer Welle 14 und einem die Welle 14 aufnehmenden statischen Bauteil 16 angeordnet und dient zur Abdichtung zwischen einer Hochdruckseite 18 und einer Niederdruckseite 20. Die Welle 14 und das statische Bauteil 16 können z.B. Teile eines Abgasturboladers sein.

Die Radialwellendichtung 10 umfasst ein Gehäuse 22 mit einem ersten Gehäuseteil 24 und einem zweiten Gehäuseteil 26, wobei das erste Gehäuseteil 24 die radiale Außenseite und eine der axialen Seiten des Gehäuses 22 bildet und das zweite Gehäuseteil 26 die andere axiale Seite des Gehäuses 22. Die Gehäuseteile 24 und 26 sind über eine Bördelung 28 miteinander verbunden.

Innerhalb des Gehäuses 22 sind ein Distanzring 30, ein elastisches Formteil 32, ein erster Dichtring 34 und ein zweiter Dichtring 36 angeordnet, wobei sämtliche Bestandteile der Radialwellendichtung 10 durch das Gehäuse 22 miteinander verspannt werden. Das elastische Formteil 32 ist aus einem Elastomer wie z.B. Fluorkautschuk gebildet.

Das elastische Formteil 32 weist einen U-förmigen Querschnitt auf mit einem ersten Randbereich 38, der zwischen dem ersten Dichtring 34 und einer ersten Stirnfläche 42 des Distanzrings 30 kraftschlüssig gehalten ist, einem zweiten Randbereich 40, der zwischen dem zweiten Dichtring 36 und einer zweiten Stirnfläche 44 des Distanzrings 30 kraftschlüssig gehalten ist, und einem gekrümmten mittleren Bereich 46, der in Richtung der Welle 14 orientiert ist. Zwischen dem Distanzring 30 und dem mittleren Bereich 46 des elastischen Formteils 32 ist ein Hohlraum 48 ausgebildet, der im Wesentlichen die Form eines außen abgeflachten Torus aufweist.

Der erste Dichtring 34 ist im Bereich seines Innenumfangs in Richtung der Niederdruckseite 20 vorgewölbt und bildet eine an der Welle 14 anliegende erste Dichtlippe 50. Die Kontaktfläche zwischen der ersten Dichtlippe 50 und der Welle 14 stellt die einzige dynamische Dichtfläche bei der Radialwellendichtung 10 dar. Der zweite Dichtring 36 ist im Bereich seines Innenumfangs in Richtung der Hochdruckseite 18 vorgewölbt und bildet eine zweite Dichtlippe 52, die an der ersten Dichtlippe 50 des ersten Dichtrings 34 anliegt und mit dieser überlappt.

Der erste Dichtring 34 und der zweite Dichtring 36 sind aus einem nicht-elastischen Kunststoffmaterial gebildet, z.B. aus PTFE oder einem TFE-Copolymer bzw. einem entsprechenden Compound. Die Dichtringe 34 und 36 können durch materialabtragende Bearbeitung, durch Umformung oder durch Spritzguss hergestellt sein.

Der Distanzring 30 weist eine zu dem Hohlraum 48 hin offene Ringnut 54 auf. Eine Bohrung 56 durch das erste Gehäuseteil 24, den ersten Dichtring 34 und den ersten Randbereich 38 des elastischen Formteils 32 mündet in dieser Ringnut 54 und bildet eine Fluidverbindung zwischen der Hochdruckseite 18 und dem Hohlraum 48, sodass der Hohlraum 48 mit dem auf der Hochdruckseite 18 herrschenden Druck beaufschlagt werden kann. Dieser Druck wird über den mittleren Bereich 46 des elastischen Formteils 32 sowie über die zweite Dichtlippe 52 auf die erste Dichtlippe 50 übertragen, sodass die erste Dichtlippe 50 mit einer Kraft an die Welle 14 angepresst wird, welche eine Gegenkraft zu dem direkt zwischen der ersten Dichtlippe 50 und der Welle 14 anliegenden Druck der Hochdruckseite 18 darstellt. Durch diesen Druckausgleich kann, weitgehend unabhängig von der Druckdifferenz zwischen der Hochdruckseite 18 und der Niederdruckseite 20, eine im Wesentlichen konstante Pressung an der dynamischen Dichtfläche aufrechterhalten werden mit einer relativ geringen, gleichmäßigen Reibung.

Durch die Vermeidung übermäßiger Reibungswärme durch eine zu hohe Pressung der ersten Dichtlippe 50 an die Welle 14, sowie durch die thermische Abschirmung des elastischen Formteils 32 durch die beiden Dichtlippen 50 und 52, können thermische Schädigungen der einzelnen Bestandteile deutlich reduziert werden, sodass die Radialwellendichtung 10 insgesamt eine sehr hohe Verschleißfestigkeit aufweist.

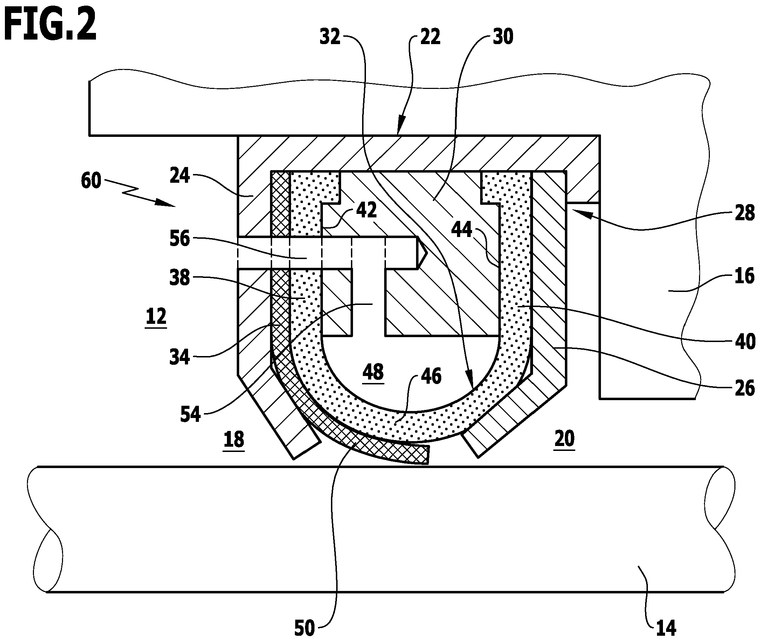

Die Figur 2 zeigt schematisch einen Radialquerschnitt durch ein zweites Ausführungsbeispiel einer erfindungsgemäßen Radialwellendichtung 60. Der Aufbau der Radialwellendichtung 60 entspricht mit Ausnahme der im Folgenden beschriebenen Unterscheide dem ersten Ausführungsbeispiel gemäß der Figur 1, wobei gleiche oder einander entsprechende Elemente jeweils mit demselben Bezugszeichen versehen sind.

Die Radialwellendichtung 60 umfasst nur einen einzigen Dichtring 34 mit einer Dichtlippe 50. Aufgrund des Fehlens eines zweiten Dichtrings ist der zweite Randbereich 40 des elastischen Formteils 32 direkt zwischen dem Distanzring 30 und dem zweiten Gehäuseteil 26 kraftschlüssig gehalten.

Der mittlere Bereich 46 des elastischen Formteils 32 liegt in diesem Fall im Wesentlichen entlang der gesamten Dichtlippe 50 direkt an dieser an, ohne dass sich eine zweite Dichtlippe dazwischen befinden würde.

Die Druckbeaufschlagung des Hohlraums 48 mit dem Druck der Hochdruckseite 18 über die Bohrung 56 und die Kraftübertragung auf die Dichtlippe 50 funktionieren nach demselben Prinzip wie bei dem ersten Ausführungsbeispiel gemäß der Figur 1. Die thermische Abschirmung des elastischen Formteils 32 ist allerdings aufgrund des Fehlens einer zweiten Dichtlippe etwas geringer.

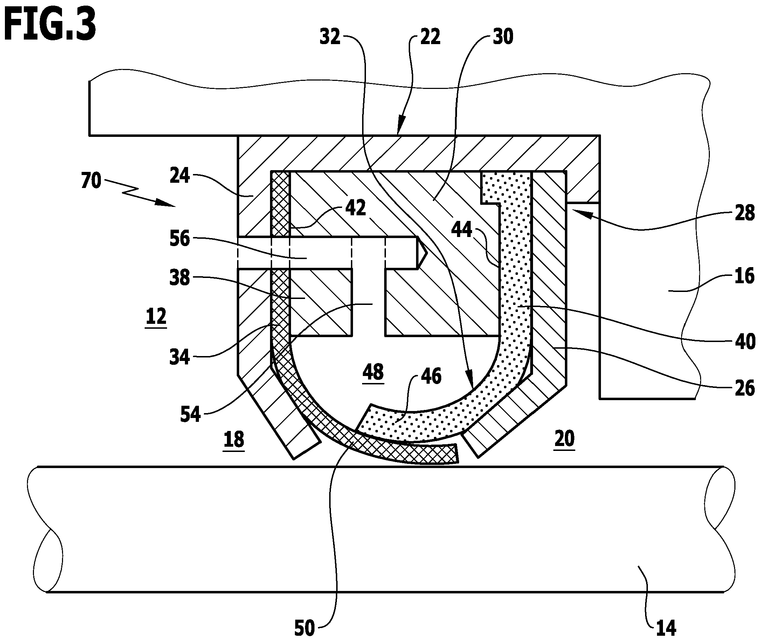

Die Figur 3 zeigt einen Radialquerschnitt durch ein drittes Ausführungsbeispiel einer erfindungsgemäßen Radialwellendichtung 70. Deren Aufbau entspricht mit Ausnahme der im Folgenden beschriebenen Unterschiede dem zweiten Ausführungsbeispiel gemäß der Figur 2, wobei gleiche oder einander entsprechende Elemente jeweils mit demselben Bezugszeichen versehen sind.

Das elastische Formteil 32 weist bei der Radialwellendichtung 70 keinen U-förmigen Querschnitt auf, sondern ist im Wesentlichen ringförmig ausgebildet, mit einem äußeren Randbereich 40, der dem zweiten Randbereich 40 gemäß den ersten beiden Ausführungsbeispielen entspricht und zwischen dem Distanzring 30 und dem zweiten Gehäuseteil 26 kraftschlüssig gehalten ist, und einem inneren Randbereich 46, der in Richtung der Hochdruckseite 18 vorgewölbt ist und der an der ersten Dichtlippe 50 des ersten Dichtrings 34 anliegt.

Der Hohlraum 48, der über die Bohrung 56 mit dem auf der Hochdruckseite 18 herrschenden Druck beaufschlagbar ist, wird bei der Radialwellendichtung 70 von dem Distanzring 30 einerseits und von dem inneren Randbereich 46 und der ersten Dichtlippe 50 andererseits, die aneinander anliegen, begrenzt. Durch die Anpressung des inneren Randbereichs 46 des elastischen Formteils 32 an die erste Dichtlippe 50 in Folge der Druckbeaufschlagung wird gleichzeitig die Abdichtung des Hohlraums 48 in Richtung der Welle 14 bewirkt.

### Bezugszeichenliste

- 10: Radialwellendichtung
- 12: Ringraum
- 14: Welle
- 16: statisches Bauteil
- 18: Hochdruckseite
- 20: Niederdruckseite
- 22: Gehäuse
- 24: erstes Gehäuseteil
- 26: zweites Gehäuseteil
- 28: Bördelung
- 30: Distanzring
- 32: elastisches Formteil
- 34: erster Dichtring
- 36: zweiter Dichtring
- 38: erster Randbereich
- 40: zweiter Randbereich
- 42: erste Stirnfläche
- 44: zweite Stirnfläche
- 46: mittlerer Bereich
- 48: Hohlraum
- 50: erste Dichtlippe
- 52: zweite Dichtlippe
- 54: Ringnut
- 56: Bohrung
- 60: Radialwellendichtung
- 70: Radialwellendichtung

## Patentansprüche

1. Radialwellendichtung (10; 60; 70) zur Abdichtung zwischen einer Hochdruckseite (18) und einer Niederdruckseite (20) in einem Ringraum (12) zwischen einer Welle (14) und einem die Welle (14) aufnehmenden statischen Bauteil (16), wobei die Radialwellendichtung (10; 60; 70) rotationssymmetrisch ausgebildet und koaxial mit der Welle (14) angeordnet ist, umfassend
(i) einen ersten Dichtring (34) aus einem nicht-elastischen Kunststoffmaterial umfassend ein Fluorpolymer, der im Bereich seines Innenumfangs in Richtung der Niederdruckseite (20) vorgewölbt ist und eine erste Dichtlippe (50) bildet, die mit einer sich durch einen Memory-Effekt des Kunststoffmaterials ergebenden Initialspannung an der Welle (14) anliegt,
(ii) einen Distanzring (30), der in Bezug auf den ersten Dichtring (34) in Richtung der Niederdruckseite (20) axial versetzt angeordnet ist, mit einer der Hochdruckseite (18) zugewandten ersten Stirnfläche (42) und einer der Niederdruckseite (20) zugewandten zweiten Stirnfläche (44), und
(iii) ein elastisches Formteil (32), das im Bereich (40) seines Außenumfangs an der zweiten Stirnfläche (44) des Distanzrings (30) anliegt und im Bereich (46) seines Innenumfangs in Richtung der Hochdruckseite (18) vorgewölbt ist und an der ersten Dichtlippe (50) anliegt,
wobei zwischen dem Distanzring (30), dem elastischen Formteil (32) und gegebenenfalls der ersten Dichtlippe (50) ein Hohlraum (48) ausgebildet ist, der mit dem auf der Hochdruckseite (18) herrschenden Druck beaufschlagt ist, derart, dass in Folge der Druckbeaufschlagung die erste Dichtlippe (50) über das elastische Formteil (32) an die Welle (14) angepresst wird, und dass der zwischen der ersten Dichtlippe (50) und der Welle (14) anliegende Druck der Hochdruckseite (18) ausgeglichen wird.

2. Radialwellendichtung (10; 60) nach Anspruch 1, wobei das elastische Formteil (32) einen ersten Randbereich (38) aufweist, der an der ersten Stirnfläche (42) des Distanzrings (30) anliegt, einen zweiten Randbereich (40), der an der zweiten Stirnfläche (44) des Distanzrings (30) anliegt, und einen die beiden Randbereiche (38, 40) verbindenden mittleren Bereich (46), der an der ersten Dichtlippe (50) anliegt, und wobei der Hohlraum (48) zwischen dem Distanzring (30) und dem mittleren Bereich (46) des elastischen Formteils (32) ausgebildet ist.

3. Radialwellendichtung (10; 60) nach Anspruch 2, wobei der erste Randbereich (38) des elastischen Formteils (32) zwischen dem ersten Dichtring (34) und der ersten Stirnfläche (42) des Distanzrings (30) kraftschlüssig gehalten ist.

4. Radialwellendichtung (10) nach Anspruch 2 oder 3, ferner umfassend einen zweiten Dichtring (36) aus dem nicht-elastischen Kunststoffmaterial, der in Bezug auf den Distanzring (30) in Richtung der Niederdruckseite (20) axial versetzt angeordnet ist, wobei der zweite Dichtring (36) im Bereich seines Innenumfangs in Richtung der Hochdruckseite (18) vorgewölbt ist und eine an der ersten Dichtlippe (50) des ersten Dichtrings (34) anliegende zweite Dichtlippe (52) bildet.

5. Radialwellendichtung (10) nach Anspruch 4, wobei die erste und die zweite Dichtlippe (34, 36) entlang eines sich in Axialrichtung erstreckenden Bereichs von mindestens 1 mm überlappen.

6. Radialwellendichtung (10) nach Anspruch 4 oder 5, wobei der zweite Randbereich (40) des elastischen Formteils (32) zwischen dem zweiten Dichtring (36) und der zweiten Stirnfläche (44) des Distanzrings kraftschlüssig gehalten ist.

7. Radialwellendichtung (10; 60; 70) nach einem der vorangehenden Ansprüche, ferner umfassend ein Gehäuse (22), welches den ersten Dichtring (34), den Distanzring (30), das elastische Formteil (32) und gegebenenfalls den zweiten Dichtring (36) miteinander verspannt.

8. Radialwellendichtung (10; 60; 70) nach einem der vorangehenden Ansprüche, wobei zur Druckbeaufschlagung des Hohlraums (48) eine Fluidverbindung zwischen der Hochdruckseite (18) und dem Hohlraum (48) vorgesehen ist.

9. Radialwellendichtung (10; 60; 70) nach Anspruch 8, wobei die Fluidverbindung mindestens eine Bohrung (56) durch den ersten Randbereich (38) des elastischen Formteils (32), durch den ersten Dichtring (34) und durch das Gehäuse (22) umfasst.

10. Radialwellendichtung (10; 60; 70) nach Anspruch 8 oder 9, wobei die mindestens eine Bohrung (56) in einer Ringnut (54) des Distanzrings (30) mündet, welche zu dem Hohlraum (48) hin offen ist.

11. Radialwellendichtung (10; 60; 70) nach einem der vorangehenden Ansprüche, wobei das nicht-elastische Kunststoffmaterial als Fluorpolymer ein homopolymeres PTFE, ein TFE-Copolymer oder Compounds derselben umfasst.

12. Radialwellendichtung (10; 60; 70) nach einem der vorangehenden Ansprüche, wobei der oder die Dichtringe (34, 36) eine Dicke im Bereich von ca. 0,2 mm bis ca. 1,5 mm aufweisen.

13. Radialwellendichtung (10; 60; 70) nach einem der vorangehenden Ansprüche, wobei das elastische Formteil (32) aus einem Elastomer gebildet ist, insbesondere durch Umformen eines Flächenmaterials, durch Spritzgießen oder durch Sintern eines Granulats.

14. Radialwellendichtung (10; 60; 70) nach einem der vorangehenden Ansprüche, wobei das elastische Formteil (32) eine Dicke von ca. 50 µm bis ca. 200 µm aufweist.

15. Verwendung einer Radialwellendichtung (10; 60; 70) nach einem der vorangehenden Ansprüche in einem Abgasturbolader für einen Verbrennungsmotor, insbesondere auf dessen Verdichterseite.

## Claims

1. Radial shaft seal (10; 60; 70) for sealing between a high pressure side (18) and a low pressure side (20) in an annular space (12) between a shaft (14) and a static structural part (16) receiving the shaft (14), wherein the radial shaft seal (10; 60; 70) is configured to be rotationally symmetric and is arranged coaxially to the shaft (14), comprising
(i) a first sealing ring (34) made from a non-elastic plastic material comprising a fluorinated polymer, which in the region of its inner periphery bulges in the direction of the low pressure side (20) and forms a first sealing lip (50) abutting against the shaft (14) with an initial stress resulting from a memory effect of the plastic material.
(ii) a spacer ring (30), which is arranged axially displaced relative to the first sealing ring (34) in the direction of the low pressure side (20), with a first face (42) directed towards the high pressure side (18) and a second face (44) directed towards the low pressure side (20), and
(iii) an elastic shaped part (32), which in the region (40) of its outer periphery abuts against the second face (44) of the spacer ring (30) and in the region (46) of its inner periphery bulges in the direction of the high pressure side (18) and abuts against the first sealing lip (50),
wherein between the spacer ring (30), the elastic shaped part (32) and, if applicable, the first sealing lip (50) there is formed a cavity (48), which is subjected to the pressure prevailing on the high pressure side (18) in such a manner that as a result of the pressure application the first sealing lip (50) is pressed against the shaft (14) by means of the elastic shaped part (32), and that the pressure of the high pressure side (18) between the first sealing lip (50) and the shaft (14) is equalized.

2. Radial shaft seal (10; 60) according to claim 1, wherein the elastic shaped part (32) has a first edge region (38), which abuts against the first face (42) of the spacer ring (30), a second edge region (40), which abuts against the second face (44) of the spacer ring (30) and a central region (46) connecting the two edge regions (38, 40) and abutting against the first sealing lip (50), and wherein the cavity (48) is formed between the spacer ring (30) and the central region (46) of the elastic shaped part (32).

3. Radial shaft seal (10; 60) according to claim 2, wherein the first edge region (38) of the elastic shaped part (32) is held in a force-locking manner between the first sealing ring (34) and the first face (42) of the spacer ring (30).

4. Radial shaft seal (10) according to claim 2 or 3, additionally comprising a second sealing ring (36) made from the non-elastic plastic material, which is arranged axially displaced relative to the spacer ring (30) in the direction of the low pressure side (20), wherein in the region of its inner periphery the second sealing ring (36) bulges in the direction of the high pressure side (18) and forms a second sealing lip (52) abutting against the first sealing lip (50) of the first sealing ring (34).

5. Radial shaft seal (10) according to claim 4, wherein the first and the second sealing lip (34, 36) overlap along a region of at least 1 mm extending in axial direction.

6. Radial shaft seal (10) according to claim 4 or 5, wherein the second edge region (40) of the elastic shaped part (32) is held in a force-locking manner between the second sealing ring (36) and the second face (44) of the spacer ring.

7. Radial shaft seal (10; 60; 70) according to one of the preceding claims, additionally comprising a housing (22), which clamps together the first sealing ring (34), the spacer ring (30), the elastic shaped part (32) and, if applicable, the second sealing ring (36).

8. Radial shaft seal (10; 60; 70) according to one of the preceding claims, wherein to subject the cavity (48) to pressure a fluid connection is provided between the high pressure side (18) and the cavity (48).

9. Radial shaft seal (10; 60; 70) according to claim 8, wherein the fluid connection comprises at least one hole (56) through the first edge region (38) of the elastic shaped part (32), through the first sealing ring (34) and through the housing (22).

10. Radial shaft seal (10; 60; 70) according to claim 8 or 9, wherein the at least one hole (56) opens in an annular groove (54) of the spacer ring (30), which is open towards the cavity (48).

11. Radial shaft seal (10; 60; 70) according to one of the preceding claims, wherein the non-elastic plastic material comprises as the fluorinated polymer a homopolymeric PTFE, a TFE copolymer or compounds thereof.

12. Radial shaft seal (10; 60; 70) according to one of the preceding claims, wherein the sealing ring or rings (34, 36) have a thickness in the range of approximately 0.2 mm to approximately 1.5 mm.

13. Radial shaft seal (10; 60; 70) according to one of the preceding claims, wherein the elastic shaped part (32) is formed from an elastomer, in particular by deforming a sheet material, by injection moulding or by sintering a granular material.

14. Radial shaft seal (10; 60; 70) according to one of the preceding claims, wherein the elastic shaped part (32) has a thickness of approximately 50 µm to approximately 200 µm.

15. Use of a radial shaft seal (10; 60; 70) according to one of the preceding claims in an exhaust gas turbocharger for an internal combustion engine, in particular on its compressor side.

## Revendications

1. Joint d'arbre radial (10 ; 60 ; 70) servant à étanchéifier entre un côté haute pression (18) et un côté basse pression (20) dans un espace annulaire (12) entre un arbre (14) et un composant (16) statique recevant l'arbre (14), dans lequel le joint d'arbre radial (10 ; 60 ; 70) est réalisé de manière symétrique en rotation et est disposé de manière coaxiale avec l'arbre (14), comprenant
(i) une première bague d'étanchéité (34) composée d'un matériau plastique non élastique comprenant un fluoropolymère, qui est bombée au préalable dans la zone de sa périphérie intérieure en direction du côté basse pression (20) et qui forme une première lèvre d'étanchéité (50), qui repose au niveau de l'arbre (14) par une tension initiale résultant d'un effet de mémoire du matériau plastique,
(ii) une bague d'espacement (30), qui est disposée de manière décalée axialement par rapport à la première bague d'étanchéité (34) en direction du côté basse pression (20), avec une première surface frontale (42) tournée vers le côté haute pression (18) et une deuxième surface frontale (44) tournée vers le côté basse pression (20), et
(iii) une partie façonnée (32) élastique, qui repose, dans la zone (40) de sa périphérie extérieure, au niveau de la deuxième surface frontale (44) de la bague d'espacement (30) et qui est bombée au préalable dans la zone (46) de sa périphérie intérieure en direction du côté haute pression (18) et qui repose au niveau de la première lèvre d'étanchéité (50),
dans lequel un espace creux (48) est réalisé entre la bague d'espacement (30), la partie façonnée (32) élastique et éventuellement la première lèvre d'étanchéité (50), lequel est soumis à l'action de la pression régnant sur le côté haute pression (18) de telle manière que suite à l'application de pression, la première lèvre d'étanchéité (50) est pressée par l'intermédiaire de la partie façonnée (32) élastique contre l'arbre (14), et que la pression présente entre la première lèvre d'étanchéité (50) et l'arbre (14), du côté haute pression (18) est compensée.

2. Joint d'arbre radial (10 ; 60) selon la revendication 1, dans lequel la partie façonnée (32) élastique présente une première zone de bord (38), qui repose au niveau de la première surface frontale (42) de la bague d'espacement (30), une seconde zone de bord (40), qui repose au niveau de la deuxième surface frontale (44) de la bague d'espacement (30), et une zone (46) centrale reliant les deux zones de bord (38, 40), laquelle repose au niveau de la première lèvre d'étanchéité (50), et l'espace creux (48) est réalisé entre la bague d'espacement (30) et la zone (46) centrale de la partie moulée (32) élastique.

3. Joint d'arbre radial (10 ; 60) selon la revendication 2, dans lequel la première zone de bord (38) de la partie moulée (32) élastique est maintenue à force entre la première bague d'étanchéité (34) et la première surface frontale (42) de la bague d'espacement (30).

4. Joint d'arbre radial (10) selon la revendication 2 ou 3, comprenant en outre une deuxième bague d'étanchéité (36) composée du matériau plastique non élastique, qui est disposée de manière décalée axialement par rapport à la bague d'espacement (30) en direction du côté basse pression (20), dans lequel la deuxième bague d'étanchéité (36) est bombée au préalable dans la zone de sa périphérie intérieure en direction du côté haute pression (18) et forme une deuxième lèvre d'étanchéité (52) reposant au niveau de la première lèvre d'étanchéité (50) de la première bague d'étanchéité (34).

5. Joint d'arbre radial (10) selon la revendication 4, dans lequel la première et la deuxième bague d'étanchéité (34, 36) se chevauchent le long d'une zone, s'étendant dans la direction axiale, d'au moins 1 mm.

6. Joint d'arbre radial (10) selon la revendication 4 ou 5, dans lequel la seconde zone de bord (40) de la partie façonnée (32) élastique est maintenue à force entre la deuxième bague d'étanchéité (36) et la deuxième surface frontale (44) de la bague d'espacement.

7. Joint d'arbre radial (10 ; 60 ; 70) selon l'une quelconque des revendications précédentes, comprenant en outre un boîtier (22), qui assemble par serrage les uns aux autres la première bague d'étanchéité (34), la bague d'espacement (30), la partie façonnée (32) élastique et éventuellement la deuxième bague d'étanchéité (36).

8. Joint d'arbre radial (10 ; 60 ; 70) selon l'une quelconque des revendications précédentes, dans lequel une liaison fluidique est prévue entre le côté haute pression (18) et l'espace creux (48) afin de soumettre l'espace creux (48) à l'action de la pression.

9. Joint d'arbre radial (10 ; 60 ; 70) selon la revendication 8, dans lequel la liaison fluidique comprend au moins un alésage (56) à travers la première zone de bord (38) de la partie façonnée (32) élastique, à travers la première bague d'étanchéité (34) et à travers le boîtier (22).

10. Joint d'arbre radial (10 ; 60 ; 70) selon la revendication 8 ou 9, dans lequel l'au moins un alésage (56) débouche dans une rainure annulaire (54) de la bague d'espacement (30), qui est ouverte en direction de l'espace creux (48).

11. Joint d'arbre radial (10 ; 60 ; 70) selon l'une quelconque des revendications précédentes, dans lequel le matériau plastique non élastique comprend en tant que fluoropolymère un PTFE homopolymère, un copolymère de TFE ou des composés de ces derniers.

12. Joint d'arbre radial (10 ; 60 ; 70) selon l'une quelconque des revendications précédentes, dans lequel la ou les bagues d'étanchéité (34, 36) présentent une épaisseur dans la plage allant d'environ 0,2 mm à environ 1,5 mm.

13. Joint d'arbre radial (10 ; 60 ; 70) selon l'une quelconque des revendications précédentes, dans lequel la partie façonnée (32) élastique est formée à partir d'un élastomère, en particulier par mise en forme d'un matériau plat, par moulage par injection ou par frittage d'un granulat.

14. Joint d'arbre radial (10 ; 60 ; 70) selon l'une quelconque des revendications précédentes, dans lequel la partie façonnée (32) élastique présente une épaisseur d'environ 50 µm jusqu'à environ 200 µm.

15. Utilisation d'un joint d'arbre radial (10 ; 60 ; 70) selon l'une quelconque des revendications précédentes dans une turbosoufflante à gaz d'échappement pour un moteur à combustion interne, en particulier sur son côté compresseur.
